# EUROPÄISCHE PATENTSCHRIFT

(11) **EP 1 180 342 B1**
(45) Veröffentlichungstag und Bekanntmachung des Hinweises auf die Patenterteilung: **17.12.2003**
(21) Anmeldenummer: 01119603.7
(22) Anmeldetag: 17.08.2001
(51) Int. Cl.: A47L 13/20, A47L 11/02, B62K 3/00, B62J 11/00

(54) **Durch Muskelkraft angetriebenes, fahrbares Reinigungsgerät**
Travelling cleaning device driven by muscle power
Appareil de nettoyage mobile déplacé par force musculaire

(30) Priorität: 18.08.2000 DE 10040428
(43) Veröffentlichungstag der Anmeldung: 20.02.2002
(73) Patentinhaber: VERMOP SALMON GMBH, D-97877 Wertheim (DE)
(72) Erfinder: Salmon, Dirk, 97877 Wertheim (DE)
(74) Vertreter: HOFFMANN - EITLE

(56) Entgegenhaltungen:
- EP-A- 0 177 452
- FR-A- 697 945
- US-A- 368 052
- US-A- 5 165 134
- US-A- 5 651 558
- PATENT ABSTRACTS OF JAPAN vol. 2000, no. 07, 29. September 2000 (2000-09-29) -& JP 2000 093375 A (HINODE KK), 4. April 2000 (2000-04-04)

## Beschreibung

### Gebiet der Erfindung

Die vorliegende Erfindung bezieht sich auf ein Reinigungsgerät, das zum Reinigen größerer Flächen, beispielsweise von Fluren von Krankenhäusern oder Bürogebäuden, Fabrikhallen und Ähnlichem eingesetzt wird.

Die Reinigung großer Flächen wird normalerweise durch kommerzielle Reinigungsbetriebe durchgeführt. Dabei kommen im Allgemeinen manuell geführte Wischmoppsysteme bzw. Reinigungsmaschinen zum Einsatz. Welche dieser Alternativen bevorzugt wird, ist dabei in der Regel abhängig von der Größe und Zugänglichkeit der zu reinigenden Fläche. Werden kleinere oder verwinkelte Räumlichkeiten gereinigt, so wird auf manuell geführte Wischmoppsysteme, die einen Halter und einen Moppbezug umfassen, zurückgegriffen. Sind große, unverstellte Flächen zu reinigen, werden Reinigungsmaschinen eingesetzt, die wiederum hinsichtlich ihrer Größe und Funktionalität. abhängig vom Umfang der durchzuführenden Reinigungsarbeiten ausgewählt werden.

### Stand der Technik

In der Technik sind einerseits manuell geführte Wischmoppsysteme und andererseits Reinigungsmaschinen jeweils gut bekannt.

Die manuell geführten Wischmoppsysteme, die in der Regel neben dem Mopphalter und dem darauf aufzuspannenden Moppbezug weitere Komponenten wie Eimer, Reinigungswagen und Ähnliches umfassen, sind in den verschiedensten Ausführungsformen auf dem Markt erhältlich. Beispielsweise sind hinsichtlich des Moppbezugs eine Vielzahl unterschiedlicher Textilien bekannt, die abhängig von den Anforderungen, die durch die Bodenfläche des Gebäudes, die Einsatzdauer, die Art des Wischens (nass oder trocken) und Ähnliches bestimmt werden, ausgewählt werden. Auch für eine Verbindungseinrichtung, mit der der Moppbezug mit dem Halter verbunden wird, sind verschiedene Ausführungsformen bekannt. Beispielsweise kann die Verbindung über Klettverschlüsse, über Taschen im Moppbezug und entsprechende Flügel im Mopphalter, über Schlingen und Ähnliches hergestellt werden. Diese manuell geführten Moppsysteme werden benützt, indem die zu Fuß gehende Reinigungskraft den Mopp vor sich führt und passend bewegt, so dass nach und nach die gesamte zu reinigende Fläche behandelt wird.

Andererseits sind Reinigungsmaschinen verbreitet, die mit einem Bürsten- oder Wischerteil ausgestaltet sind. Diese Reinigungsmaschinen umfassen einen Antrieb, der einerseits eine Bewegung der Bürsten bzw. des Wischerteils bewirkt und andererseits einen Vortrieb der Reinigungsmaschine hervorruft. Je nach Ausgestaltung der Reinigungsmaschine geht die Reinigungskraft hinter der Reinigungsmaschine her, ohne nennenswert für die Vorwärtsbewegung derselben sorgen zu müssen, oder die Reinigungskraft sitzt auf der Reinigungsmaschine und fährt mit dieser mit. Die Reinigungskraft muss also einzig Richtungsänderungen manuell einleiten. Der Vortrieb und die Wischbewegung werden von der Maschine durch ihren Antrieb hervorgerufen.

Darüber hinaus ist aus der europäischen Patentanmeldung EP 0 177 452 A ein Reinigungsgerät nach dem Oberbegriff des Anspruchs 1 bekannt.

### Darstellung der Erfindung

Der Erfindung liegt die Aufgabe zugrunde, ein Reinigungsgerät für die Reinigung von größeren Flächen vorzusehen, bei dem einerseits die Arbeitsbelastung der Reinigungsperson klein gehalten wird und gleichzeitig hohe Investitions- , Wartungsund Betriebskosten vermieden werden.

Diese Aufgabe wird durch ein Reinigungsgerät mit den Merkmalen des Kennzeichnenden Teils des Anspruchs 1 gelöst.

Der Erfindung liegt der Gedanke zugrunde, ein Reinigungsgerät zu schaffen, das einerseits die Reinigungskraft entlastet, indem ihr die mechanische Betätigung und Führung des Moppsystems abgenommen wird. Andererseits sollen die mit der Motoranlage verbundenen Nachteile einer Reinigungsmaschine vermieden werden. Insgesamt wird durch die Erfindung eine Art Zwischenlösung zwischen dem manuell geführten Wischmoppsystem und der Reinigungsmaschine vorgesehen.

Insbesondere wird durch das Vorsehen eines mit Muskelkraft antreibbaren, lenkbaren Fahrgeräts, mit dem der Wischmopp gleichzeitig geführt wird, eine Kraft sparende und ergonomische Führung des Wischmopps erzielt. Dabei wird, aufgrund der kleineren Abmessungen des mit Muskelkraft antreibbaren, lenkbaren Fahrgeräts hinsichtlich der Eigenschaft der Wendigkeit des Reinigungsgeräts keine Einbuße gegenüber dem manuell geführten Moppsystem hervorgerufen. Auch hinsichtlich der Flexibilität des Einsatzes und der Führung des Systems auch an engeren Raumstellen ist das Reinigungsgerät mit einem manuell geführten System vergleichbar.

Somit besitzt das Reinigungsgerät im Wesentlichen die Vorteile der Wendigkeit und Flexibilität des Einsatzes eines manuell geführten Wischmoppsystems und zusätzlich eine näherungsweise ebenso ergonomischen Arbeitsweise wie eine Reinigungsmaschine.

Dadurch, dass der Wischmopp im Bereich der Lenkachse des Fahrgeräts über ein Kopplungsteil mit dem Fahrgerät verbindbar ist, wird sichergestellt, dass der Wischmopp sich zusammen mit dem Fahrgerät lenken lässt, das System insgesamt also nicht starr oder unflexibel wird, wodurch auch Kurven, engere Raumstellen oder Wenden durchgeführt werden können. Die Lenkbewegung durch diese Anordnung des Fahrgeräts wird direkt in den Wischmopp eingeleitet und ein richtungstreues Fahren mit dem Reinigungsgerät ist möglich.

Vorteilhafte Ausführungsformen sind durch die übrigen Ansprüche gekennzeichnet.

So ist nach einer bevorzugten Ausführungsform das Fahrgerät als Roller ausgebildet. Ein Roller bietet den Vorteil, das er aufgrund seiner kompakten Bauweise einfach transportiert werden kann und ein wendiges und einfach zu bedienendes Fahrgerät ist. Insbesondere ist das Fahren mit einem Roller auch bei einem mit dem Roller verbundenen Wischmopp problemlos möglich, da ein Roller sich durch verhältnismäßig stabile Fahreigenschaften auszeichnet. Auch hinsichtlich des Wartungsaufwands ist ein Roller, mit einem oder mit zwei Vorderrädern, vorzuziehen, da aufgrund einer geringen Anzahl von Bauteilen geringe Verschleiß- und Ausfallerscheinungen zu erwarten sind.

Nach einer bevorzugten Ausführungsform weist der Roller zwei Vorderräder auf. Dies trägt weiter dazu bei, dass eine stabile, ruhige und richtungstreue Fahrt auch bei vorgespanntem oder angebrachtem Wischmopp möglich ist.

Nach einer anderen bevorzugten Ausführungsform ist das Fahrgerät als Fahrrad gestaltet. Auch ein Fahrrad ist in der Regel für jedermann einfach zu bedienen. Im Vergleich zu einem Roller zeichnet es sich jedoch durch eine geringere Wendigkeit und einen erhöhten Platzbedarf aus, so das diese Lösung insbesondere bei größeren zu reinigenden Raumfläche mit geringeren Anforderungen an die Wendigkeit des Fahrgeräts vorzuziehen ist.

Bevorzugterweise umfasst das Kopplungsteil, das den Wischmopp mit dem Fahrgerät verbindet, zwei Stäbe. Dadurch wird eine einfache Kopplung des Wischmopps an das Fahrgerät möglich, die eine sichere, zuverlässige Übertragung der Lenkbewegung, die durch das Fahrgerät ausgeübt wird, auf den Wischmopp zulässt. Dadurch kann der Wischmopp ebenfalls zuverlässig geführt werden, was zu einem ruhigen und stabilen Betrieb der gesamten Anordnung führt. Zudem ist diese Kopplung einfach, so dass sie einerseits bei einer entsprechenden Ausgestaltung rasch zu montieren ist (z.B. Steck- oder Schnappverbindungen an beiden Stabenden) und andererseits wartungsarm ist.

Vorteilhafterweise sind die Stäbe voneinander beabstandet am Wischmopp gelenkig angebracht. Am gegenüberliegenden Ende der Stäbe ist vorteilhafterweise eine Befestigung an der Lenkachse dergestalt vorgesehen, dass die Stäbe an beiden freien Enden im Wesentlichen denselben Abstand zueinander aufweisen, also nahezu parallel zueinander geführt werden. Auch dies gewährleistet, dass die Einleitung der Lenkbewegung von dem Fahrgerät in den Wischmopp sicher und zuverlässig geschieht. Dadurch, dass zwei Punkte zur Einleitung der Lenkbewegung in den Wischmopp vorgesehen sind, nämlich an jedem der Stäbe einer, wird ein Verkeilen, bzw. eine verzögerte Bewegung des Wischmopps im Bezug auf das Fahrgerät vermieden.

Nach einer bevorzugten Ausführungsform sind die Stäbe dabei an den freien Enden der Lenkachse angelenkt. Ein Anbringen der Stäbe an den freien Achsstummeln dient wiederum dazu, dass ein möglichst großer Abstand zwischen beiden Stäben erzielt wird, was wiederum dazu führt, dass die Lenkbewegung nicht ruckartig sondern gleichmäßig in den Wischmopp eingeleitet und dort nachvollzogen wird.

Nach einer bevorzugten Ausführungsform umfasst das Reinigungsgerät ferner eine Einrichtung zum temporären Anheben des Wischmopps. Dies ist insbesondere dann vorteilhaft, wenn mit dem Reinigungsgerät Türen durchfahren werden sollen, Schwellen überwunden werden müssen oder andere Bodenunebenheiten auftreten. Dazu ist es vorteilhaft, den Wischmopp kurzzeitig zum Überwinden des Hindernisses anzuheben, so dass ein Verkeilen des Mopps mit der Schwelle nicht auftritt. Auch zum Wechseln des Wischbezugs ist es vorteilhaft, eine Einrichtung zum Anheben des Wischmopps vorzusehen, so dass der Wischbezug im angehobenen Zustand des Wischmopps ausgetauscht werden kann.

Vorteilhafterweise ist diese Einrichtung zum Anheben des Wischmopps als Gestänge oder Seilzug ausgeführt, das den Wischmopp mit einem Lenkerbereich des Fahrgeräts verbindet. Dadurch kann die Reinigungskraft, die das Fahrgerät bedient, durch ein Betätigen des Endes des Gestänges bzw. Seilzugs, das sich in der Nähe des Lenkers des Fahrgeräts befindet, ein Anheben des Wischmopps erreichen, so dass beispielsweise Schwellen oder Bodenunebenheiten überwunden werden können, ohne dass die Fahrt mit dem Reinigungsgerät unterbrochen oder gestoppt werden muss. Das Anbringen der Betätigung in der Nähe des Lenkers des Fahrgeräts führt dazu, dass die Reinigungskraft den Lenker nicht loslassen muss, um die Einrichtung zum Anheben des Wischmopps zu betätigen, so dass sie zu keiner Zeit die Kontrolle über das Reinigungsgerät verliert.

Vorteilhafterweise ist die Einrichtung zum temporären Anheben des Wischmopps ferner mit einer Arretiereinrichtung ausgestattet, die weiter bevorzugterweise im Lenkerbereich des Fahrgeräts angebracht ist. Dadurch wird insbesondere ein Austausch des Moppbezugs möglich, ohne dass die Reinigungskraft gleichzeitig den Mopphalter anheben und halten muss. Vielmehr wird der Wischmopp frei durch das Gestänge bzw. den Seilzug gehalten und getragen, so dass ein Austausch des Moppbezugs am Wischmopp möglich ist, wobei die Reinigungskraft beide Hände dazu frei hat.

Nach einer vorteilhaften Ausführungsform ist der Wischmopp des Reinigungsgeräts segmentiert ausgeführt. Insbesondere sind äußere Bereiche des Wischmopps vorteilhafterweise klappbar und/oder schwenkbar bezüglich eines mittleren Bereichs gestaltet. Die Schwenkbewegung kann dabei entweder in der horizontalen, also um eine Achse senkrecht zum reinigenden Boden, durchgeführt werden oder aber durch eine Klappbewegung aus der Horizontalen in die Vertikale gestaltet sein. Solche klappbaren Endstücke bzw. Segmente des Wischmopps ermöglichen, dass kleine Wandnischen und Wandunebenheiten beim Fahren mit dem Wischgerät gereinigt werden können, ohne dass die gradlinige Fahrstrecke verlassen werden muss. Ferner wird vermieden, dass Schläge auf den Lenker des Fahrgeräts übertragen werden. Die Endstücke können dabei an beiden Enden oder aber nur an einem freien Ende des Wischmopps vorgesehen sein. Hinsichtlich ihrer Größe sind keine Grenzen vorgegeben. Dennoch haben sich Segmente als nützlich erwiesen, die eine Aufteilung des Wischmopps hervorrufen, so dass an den äußeren Abschlüssen Segmente vorgesehen sind, die etwa 20% der Gesamtbreite einnehmen.

Zusätzlich ist es möglich, die beweglichen Endstücke bzw. Segmente federnd zu lagern, so dass im unbelasteten Zustand mit einem mittleren Teil des Wischmopps ein durchgängiges Gerät gebildet wird. Die Segmente kehren in diesem Fall nach dem Passieren des Hindernisses automatisch in die Ausgangsstellung zurück.

Schließlich sei der Vollständigkeit halber erwähnt, dass zur Befestigung eines Wischmoppbezugs am Wischmopphalter verschiedenste Techniken zum Einsatz kommen können. Beispielsweise ist es möglich, den Wischmoppbezug mit dem Halter über Taschen, Klettstreifen oder Bindfäden zu verbinden.

### Kurze Beschreibung der Zeichnung

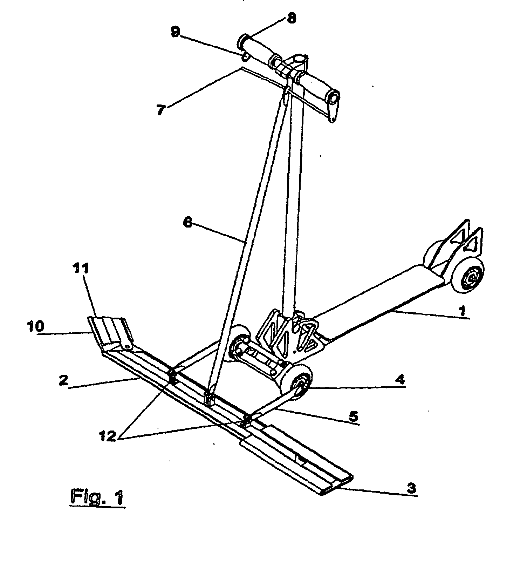

Nachfolgend wird die Erfindung rein beispielhaft anhand der beigefügten Figur beschrieben, wobei
- Fig. 1: eine perspektivische Ansicht eines erfindungsgemäßen Reinigungsgeräts zeigt.

### Wege zur Ausführung der Erfindung

Fig. 1 zeigt einen Roller 1, der mit einem Wischmopp 3 zu einem erfindungsgemäßen Reinigungsgerät verbunden ist. Die Verbindung erfolgt in der dargestellten Ausführungsform über ein Kopplungsteil 5, das durch zwei zueinander parallele Stangen gestaltet ist. Dabei ist jeweils ein freies Ende einer Verbindungsstange 5 an dem Wischmopp 3 über eine Lagerstelle 12 angelenkt. Das andere freie Ende jeder Stange 5 ist mit der Lenkachse 4 an dem freien Ende der Lenkachse schwenkbar verbunden.

Die Lagerung des Kopplungsteils 5 an dem Wischmopp 3 ist über ein Schwenkgelenk 12 realisiert. Die Lagerung an der Lenkachse 4 des Fahrgeräts 1, das in der dargestellten Ausführungsform als Roller ausgeführt ist, ermöglicht ebenfalls eine Schwenkbewegung um die Achse 4.

Indem beide Lagerstellen des Kopplungsteils 5 am Wischmopp und am Fahrgerät (bzw. in der dargestellten Ausführungsform jede Lagerstelle jeder Stange des Kopplungsteils 5) als schwenkbare Lagerung ausgeführt wird, ist es möglich, kleine Differenzen in der Bodenhöhe in einer zu überfahrenden Fläche zwischen Roller 1 und Wischmopp 3 auszugleichen, indem eine leichte Schrägstellung der Stäbe 5 des Kopplungsteils aus der Horizontalen hervorgerufen wird.

Die Anbindung der Kopplungsteile 5 erfolgt in der dargestellten Ausführungsform in einem mittleren Bereich des Wischmopps 3. Insbesondere erfolgt sie in einem Bereich, in dem der Wischmopp 3 und insbesondere der Wischmopphalter 2 als starres Bauteil ausgeführt ist. Selbstverständlich ist es auch möglich, die Anbindung des Wischmopps an das Fahrgerät an einer anderen Stelle anzubringen, die konstruktiv geeignet erscheint, insbesondere abhängig von der konstruktiven Ausgestaltung des Fahrgeräts.

Auf Seiten des Rollers 1 erfolgt die Kopplung so, dass die Stäbe 5 außerhalb der Räder im vorderen Bereich des Rollers an der Lenkachse angreifen. Dadurch wird ein verhältnismäßig großer Abstand zwischen beiden Stäben 5 des Kopplungsteils hervorgerufen, wodurch eine gute Übertragung der Lenkbewegung beim Fahren mit dem Wischgerät an den Wischmopp sichergestellt wird und insbesondere die Schwenkbewegungen zur Richtungsänderung übernommen werden, was zu einem richtungstreuen Fahren mit dem kompletten Reinigungsgerät führt. Insbesondere findet die Verbindung der Kopplungsteil-Stangen 5 in der dargestellten Ausführungsform an den freien Achsstummeln der Lenkachse 4 des Fahrgeräts 1 statt. Selbstverständlich ist es jedoch auch möglich, die Anbindung der Stangen des Kopplungsteils bzw. einer einzelnen Stange eines Kopplungsteils näher an der Symmetrieachse des Reinigungsgeräts vorzusehen, also nicht ganz außen an der Lenkachse 4. Allerdings ist wichtig, dass die Übertragung der Lenkbewegung an den Wischmopp ausreichend, um eine richtungstreue Fahrweise des Wischmopps in Bezug auf das Fahrgerät sicherzustellen, solange die Anbindung und Verbindung beider Teile, nämlich des Wischmopps und des Fahrgeräts, im Bereich der Lenkachse 4 erfolgt.

Zwischen dem Wischmopp 3 und dem Lenkbereich des Fahrgeräts 1, in diesem Fall dem Roller, ist ferner über ein Gestänge 6, das im Wesentlichen in der Symmetrieachse des Rollers angebracht ist, eine temporäre Aufhängung für den Wischmopp vorgesehen. Insbesondere ist das Gestänge 6, das alternativ beispielsweise als Seilzug ausgeführt werden kann, an seinem dem Lenker 8 nahen Ende mit einem Hebel 7 versehen, der in der dargestellten Ausführungsform quer zu dem Gestänge 6 und im Wesentlichen parallel zum Lenker 8 verläuft. Dieser Hebel 7 kann in eine Hebelarretierung 9, die am Lenker 8 angebracht ist, eingehängt werden, wodurch der Wischmopp und das Gestänge 6 in einem angehobenen Zustand arretiert werden. Die Hebelarretierung 9 ist so gestaltet, dass sie als Öse geformt ist und an einem freien Ende des Hebels 7, der symmetrisch an dem Gestänge 6 angebracht ist, aufgehängt ist. Das andere freie Ende des Hebels 7 ist über eine Aufhängevorrichtung 13, die schwenkbar am Lenker 8 angebracht ist, fest mit diesem verbunden, so dass das Gestänge 6 im nicht arretierten Zustand nicht ungewollt zur Seite kippen oder rotieren kann.

Hinsichtlich der Ausgestaltung des Fahrgeräts ist anzumerken, dass dieser nahezu keine Grenzen gesetzt sind. In der dargestellten Darstellungsform ist für das Fahrgerät ein Roller 1 gewählt, der jeweils zwei Vorder- und zwei Hinterräder aufweist. Dieser Roller 1 kann als klappbarer Roller oder aber als starrer Roller ausgeführt sein. Auch die Lenkung des Rollers ist frei wählbar. Beispielsweise kann sie über eine Lenkung geschehen, bei der durch ein Kippen der Lenkstange um eine horizontale Achse eine Kurvenfahrt des Rollers eingeleitet wird. Alternativ dazu kann aber auch ein herkömmlicher Roller verwendet werden, bei dem die Kurvenfahrt durch ein Drehen der Lenkstange um eine vertikale Achse hervorgerufen wird. Die Anzahl der Räder des Rollers ist nicht auf die dargestellten vier beschränkt. Vielmehr können auch zwei oder drei Räder, also beispielsweise jeweils ein Rad vorne und ein Rad hinten oder zwei Räder vorne und ein Rad hinten, vorgesehen werden. Allerdings wird bei nur einem Vorderrad die Länge der Lenkachse 4 verringert, was die Anbringung des Kopplungsteils 5 und damit die Übertragung der Lenkbewegung vom Fahrgerät an den Wischmopp 3 geringfügig erschwert.

Auch für die Gestaltung des Wischmopps 3 bestehen keine besondere Vorgaben. In der dargestellten Ausführungsform umfasst der Wischmopp 3 einen Halter 3, an dem an Moppbezug über eine Kletteinrichtung 11 angebracht wird. Alternativ dazu kann der Moppbezug beispielsweise über Taschen im Moppbezug oder über ein einfaches Verbinden des Moppbezugs mittels Bindfäden mit dem Mopphalter verbunden werden.

Bezüglich der Gestaltung des Moppbezugs ist es allerdings besonders vorteilhaft, wenn an mindestens einem freien Ende des Wischmopps 3 ein segmentiertes Wischmoppstück 10 vorgesehen ist. In der dargestellten Ausführungsform ist ein kurzes, äußeres Stück des Wischmopps 3 an einem mittleren Stück, an dem auch die Verbindung zu dem Fahrgerät 1 vorgesehen ist, schwenkbar angebracht. Die Schwenkbewegung in der dargestellten Ausführungsform erfolgt um eine Schwenkachse, die senkrecht zur Bodenfläche ist, also in der Vertikalen verläuft. Zusätzlich ist ein Rückstellmechanismus, beispielsweise in der Form einer Feder oder eines Gummizugs, für das Klappsegment vorteilhaft, da in diesem Fall das Klappsegment im unbelasteten Zustand in die Ausgangsposition zurückkehrt, die eine direkte Verlängerung des mittleren Wischmoppelements 3 ist. Dadurch wird im unbelasteten Zustand ein scheinbar einstückiger Wischmopp 3 erzielt, der eine vergrößerte Wischfläche bietet, da er um das Klappsegmentstück 10 verbreitert ist.

Eine alternative Klapprichtung für das freie äußere Ende 10 des Wischmopps 3 ist in einer Klappung um eine horizontale Achse zu sehen, so dass das klappbare Halteende 10 in die Vertikale gedreht wird.

Nachfolgend wird die Arbeitsweise des dargestellten Reinigungsgeräts, das im Wesentlichen einen Roller 1 und einen Wischmopp 3 umfasst, kurz beschrieben.

Möchte die Reinigungskraft, die das Reinigungsgerät über eine herkömmliche Rollerbewegung antreibt, eine Bodenfläche reinigen, so wird über das Gestänge 6 und den Hebel 7 eine Arretierung des Wischmopps 3 in einem vom Boden angehobenen Zustand gelöst, indem der Hebel 7 aus der Arretierung 9, die am Lenker 8 angebracht ist, bewegt wird. Selbstverständlich ist es auch möglich, den Wischmopp an einer anderen Stelle bzw. über einen anderen Mechanismus zu arretieren. Die Anbringung im Bereich des Lenkers 8 ist jedoch vorzuziehen, da in diesem Fall die Reinigungskraft während der normalen Fahrbewegung, in der sie ihre Hände am Lenker 8 des Rollers 1 hat, den Arretiermechanismus betätigen kann. Durch ein Lösen des Hebels 7 aus der Arretieröse 9 wird der Wischmopp durch die Wirkung der Schwerkraft auf die Bodenfläche abgesenkt.

Führt die Reinigungskraft ihre Rollerbewegung zum Antrieb des Reinigungsgeräts in Geradeausfahrt fort, so wird durch die Auflage des Wischmopps 3 mit aufgespanntem Moppbezug am Boden dieser gereinigt.

Leitet die Reinigungskraft, die weiter eine Rollerbewegung durchführt, durch Betätigen der Lenkung eine Kurvenfahrt ein, so wird diese von der Lenkachse 4, an der die Vorderräder des Rollers 1 angebracht sind, über das Kopplungsteil 5, das in der Form von zwei Stangen ausgeführt ist, an den Mopphalter übertragen, der somit die Richtungsänderung direkt aufnimmt und ebenfalls durchführt. Dadurch wird ein richtungstreues Fahren mit dem gesamten Reinigungsgerät möglich.

Gelangt die Reinigungskraft weiter bei ihrer Reinigungsfahrt an Bodenunebenheiten oder Schwellen, so können kleinere Schwellen ohne eine weitere Betätigung irgendeines Mechanismus überwunden werden, dadurch dass durch die gelenkige Lagerung des Gestänges 5, dass das Kopplungsteil bildet an den Lagerstellen 12 bzw. an der Lenkachse 4 kleinere Unebenheiten zwischen Fahrgerät 1 und Wischmopp 3 ausgeglichen werden. Sollen jedoch größere Unebenheiten überwunden werden, so kann die Reinigungskraft durch Betätigen des Hebels 7 den Wischmopp über das Gestänge 6 kurzfristig leicht anheben und die Unebenheit überwinden.

Möchte die Reinigungskraft schließlich Randbereiche von Räumen reinigen, so kann sie zunächst an diese mit dem Reinigungsgerät durch einfache Lenkung nahe heranfahren. Die klappbaren Ecken 10, die beiderseits des Wischmopps 3 ausgeführt sein können, dienen zudem dazu, den Wandanschlussbereich gut reinigen zu können. Insbesondere werden Wandnischen und Wandunebenheiten erfasst bzw. ausgeglichen, indem die Klappenden leicht geschwenkt werden, ohne dass die geradlinige Fahrstrecke verlassen werden muss. Ferner wird vermieden, dass starke Stöße auf den Lenker des Fahrgeräts übertragen werden. Sind die Wandnischen oder Wandunebenheiten überwunden, so klappt das Endstück des Wischmopps 3 automatisch aufgrund eines Federmechanismus in eine Position zurück, in der es eine geradlinige Verlängerung des Wischmopps 3 ist. Somit wird eine große Wischbreite des Wischmopps erzielt.

Soll schließlich der Moppbezug ausgetauscht oder gereinigt werden bzw. der Reinigungsvorgang beendet werden, so hält die Reinigungskraft das Reinigungsgerät an und betätigt den Hebel 7 mit dem damit verbundenen Gestänge so, dass der Wischmopp 3 angehoben wird. Danach wird der Hebel 7 in die Arretieröse 9 eingehängt, so dass sich der Wischmopp 3 im arretierten Zustand etwas über dem Boden befindet. Nunmehr kann die Reinigungskraft einfach den Moppbezug austauschen bzw. entfernen oder reinigen.

Es sei noch erwähnt, dass vorteilhafterweise der Verbindungsmechanismus, der aus dem Kopplungsteil 5 und einem entsprechenden Anschluss an der Lenkachse 4 des Fahrgeräts besteht vorteilhafterweise so gestaltet sind, dass eine rasche Montage möglich ist. Dadurch können das Fahrgerät 1, gegebenenfalls sogar im zusammengeklappten Zustand, und der Wischmopp 3 getrennt transportiert werden und unmittelbar bevor sie zum Einsatz kommen aufgebaut werden. Dazu sind insbesondere Steck- oder Schnappverbindungen geeignet.

Der wesentliche Aspekt der Erfindung liegt darin, dass ein Reinigungsgerät vorgesehen wird, das einerseits eine rasche Reinigung größerer Bodenflächen unter mäßigem Kraftaufwand ermöglicht und andererseits die hohen Investitions- , Wartungs- und Betriebskosten eines Reinigungsautomaten vermieden werden. Dies wird dadurch erzielt, dass das Gerät vollständig mechanisch betätigt wird und ausschließlich verschleißunanfällige Bauteile zum Einsatz kommen.

## Patentansprüche

1. Reinigungsgerät, umfassend ein mit Muskelkraft angetriebenes, lenkbares Fahrgerät (1) **gekennzeichnet durch** einen Wischmopp (3), der über ein Kopplungsteil (5) im Bereich einer Lenkachse (4) des Fahrgeräts (1) mit dem Fahrgerät (1) verbunden ist.

2. Reinigungsgerät nach Anspruch 1, **dadurch gekennzeichnet, dass** das Fahrgerät (1) ein Roller ist.

3. Reinigungsgerät nach Anspruch 2, **dadurch gekennzeichnet, dass** der Roller (1) zwei Vorderräder umfasst.

4. Reinigungsgerät nach Anspruch 1, **dadurch gekennzeichnet, dass** das Fahrgerät ein Fahrrad ist.

5. Reinigungsgerät nach einem der vorhergehenden Ansprüche, **dadurch gekennzeichnet, dass** das Kopplungsteil (5) zwei Stäbe umfasst.

6. Reinigungsgerät nach Anspruch 5, **dadurch gekennzeichnet, dass** die Stäbe (5) an ihrem einen Ende in Abstand zueinander am Wischmopp gelenkig (12) angebracht sind und am gegenüberliegenden Ende an der Lenkachse (4) im Wesentlichen mit demselben Abstand zueinander angelenkt sind.

7. Reinigungsgerät nach Anspruch 6, **dadurch . gekennzeichnet, dass** die Stäbe (5) an den freien Enden der Lenkachse (4) angelenkt sind.

8. Reinigungsgerät nach einem der vorhergehenden Ansprüche, weiter umfassend eine Einrichtung (6, 7) zum temporären Anheben des Wischmopps (3).

9. Reinigungsgerät nach Anspruch 8, **dadurch gekennzeichnet, dass** die Einrichtung zum temporären Anheben des Wischmopps ein Gestänge (6) oder einen Seilzug umfasst, das/der den Wischmopp (3) mit einem Lenkerbereich (8) des Fahrgeräts (1) verbindet.

10. Reinigungsgerät nach Anspruch 9, **dadurch gekennzeichnet, dass** die Einrichtung zum temporären Anheben des Wischmopps ferner eine Arretiereinrichtung (9) umfasst, die im Lenkerbereich (8) des Fahrgeräts (1) angebracht ist.

11. Reinigungsgerät nach einem der vorhergehenden Ansprüche, **dadurch gekennzeichnet, dass** der Wischmopp (3) segmentiert ausgeführt ist und äußere Bereiche (10) des Wischmopps (3) klappbar und/oder schwenkbar bezüglich eines mittleren Bereichs sind.

## Claims

1. Cleaning appliance, comprising a steerable mobile appliance (1), driven by muscle power, **characterised by** a mop (3) connected to the mobile appliance (1) via a coupling part (5) in the area of the steering axle (4) of the mobile appliance (1).

2. Cleaning appliance according to claim 1, **characterised in that** the mobile appliance (1) is a scooter.

3. Cleaning appliance according to claim 2, **characterised in that** the scooter (2) comprises two front wheels.

4. Cleaning appliance according to claim 1, **characterised in that** the mobile appliance (1) is a bicycle.

5. Cleaning appliance according to one of the preceding claims, **characterised in that** the coupling part (5) comprises two rods.

6. Cleaning appliance according to claim 5, **characterised in that** the rods (5) are attached in articulated manner (12) to the mop at one of their ends at a distance from one another and at the opposite end are linked to the steering axle (4) substantially at the same distance from one another.

7. Cleaning appliance according to claim 6, **characterised in that** the rods (5) are linked to the open ends of the steering axle (4).

8. Cleaning appliance according to one of the preceding claims, further comprising a device (6, 7) for temporary lifting of the mop (3).

9. Cleaning appliance according to claim 8, **characterised in that** the device for temporary lifting of the mop comprises a connecting rod (6) or a cable pull which connects the mop (3) to a handlebar area (8) of the mobile appliance (1).

10. Cleaning appliance according to claim 9, **characterised in that** the device for temporary lifting of the mop further comprises a locking device (9) which is attached in the handlebar area (8) of the mobile appliance (1).

11. Cleaning appliance according to one of the preceding claims, **characterised in that** the mop (3) is configured as segmented and external areas (10) of the mop (3) are foldable and/or swivellable in respect of a central area.

## Revendications

1. Appareil de nettoyage, comprenant un appareil de déplacement (1), manoeuvrable sur une trajectoire, entraîné à la force des muscles, **caractérisé par** un balai à franges d'essuyage (3) relié à l'appareil de déplacement (1) par l'intermédiaire d'une partie d'accouplement (5), dans la zone d'un axe de direction (4) de l'appareil de déplacement (1).

2. Appareil de nettoyage selon la revendication 1, **caractérisé en ce que** l'appareil de déplacement (1) est une patinette.

3. Appareil de nettoyage selon la revendication 2, **caractérisé en ce que** la patinette (1) comprend deux roues avant.

4. Appareil de nettoyage selon la revendication 1, **caractérisé en ce que** l'appareil de déplacement est une bicyclette.

5. Appareil de nettoyage selon l'une des revendications précédentes, **caractérisé en ce que** la partie d'accouplement (5) comprend deux barres.

6. Appareil de nettoyage selon la revendication 5, **caractérisé en ce que** les barres (5), à une de leurs extrémités, sont montées de façon articulée (12), à distance l'une de l'autre, sur le balai à franges d'essuyage et, à l'extrémité opposée, sont articulées l'une par rapport à l'autre sur l'axe de direction (4), sensiblement avec le même espacement l'une à l'autre.

7. Appareil de nettoyage selon la revendication 6, **caractérisé en ce que** les barres (5) sont articulées sur les extrémités libres de l'axe de direction (4).

8. Appareil de nettoyage selon l'une des revendications précédentes, comprenant en outre un dispositif (6, 7) pour le levage temporaire du balai à franges d'essuyage.

9. Appareil de nettoyage selon la revendication 8, **caractérisé en ce que** le dispositif de soulèvement temporaire du balai à franges d'essuyage comprend une tringlerie (6) ou un câble de traction, qui relie le balai à franges d'essuyage (3) à une zone de guidon (8) de l'appareil de déplacement(1).

10. Appareil de nettoyage selon la revendication 9, **caractérisé en ce que** le dispositif de soulèvement temporaire du balai à franges d'essuyage comprend en outre un dispositif d'arrêt (9), monté dans la zone de guidon (8) de l'appareil de déplacement(1).

11. Appareil de nettoyage selon l'une des revendications précédentes, **caractérisé en ce que** le balai à franges d'essuyage (3) est réalisé de façon segmentée, et des zones extérieures (10) du balai à franges d'essuyage (3) sont rabattables et/ou pivotantes par rapport à une zone médiane.
